# EUROPÄISCHE PATENTSCHRIFT

(11) **EP 0 894 205 B1**
(45) Veröffentlichungstag und Bekanntmachung des Hinweises auf die Patenterteilung: **17.05.2000**
(21) Anmeldenummer: 97915388.9
(22) Anmeldetag: 19.03.1997
(51) Int. Cl.: F16C 29/08

(54) **LINEARWÄLZLAGER MIT LÄNGSDICHTUNGEN**
LINEAR ROLLING BEARING WITH LONGITUDINAL SEALING ELEMENTS
PALIER A ROULEMENT LINEAIRE MUNI D'ELEMENTS D'ETANCHEITE LONGITUDINAUX

(30) Priorität: 20.04.1996 DE 19615791
(43) Veröffentlichungstag der Anmeldung: 03.02.1999
(73) Patentinhaber: INA Wälzlager Schaeffler oHG, 91072 Herzogenaurach (DE)
(72) Erfinder: MOSEBERG, Ralf, D-66862 Kindsbach (DE); SCHEIB, Frank, D-66540 Neunkirchen (DE); WELSCH, Annette, D-66424 Homburg (DE)
(86) Internationale Anmeldenummer: EP9701372
(87) Internationale Veröffentlichungsnummer: WO9740280

(56) Entgegenhaltungen:
- EP-A- 0 427 238
- EP-A- 0 594 209
- DE-A- 3 545 168
- DE-A- 4 226 607
- DE-A- 4 413 373
- DE-U- 9 311 059
- US-A- 4 443 017
- US-A- 4 854 741
- US-A- 5 356 223
- US-A- 5 358 336
- US-A- 5 492 343
- US-A- 5 492 412

## Beschreibung

### Gebiet der Erfindung

Die Erfindung betrifft ein Linearwälzlager nach dem Oberbegriff des Anspruchs 1.

### Hintergrund der Erfindung

Bei Profilschienenführungen muß das Eindringen von Schmutz in den Lagerbereich verhindert werden, um die Funktionsfähigkeit des Lagers zu erhalten. Dieses soll auf möglichst kleinem Bauraum verwirklicht werden. Dabei geht es speziell darum, zu verhindern, daß der Schmutz, der trotz der Frontabstreifer in die Führung eingedrungen ist, weiter auf die Laufbahnen und in die Kugelumläufe gelangt. Beschädigungen der Frontabstreiferlippe können durch eingefallene Abdeckkappen an scharfkantigen Führungsschienenbohrungen sowie durch unsachgemäße Montage entstehen. Angefaste Führungsschienenbohrungen ermöglichen trotz der Frontabstreifer das Eindringen von Schmutz in den Lagerbereich.

Aus der EP 0 594 209 A ist ein Linearlager mit Längsabstreifern bekannt, die das Eindringen von Schmutz an der Unterseite des Führungswagens verhindern. Bei einer solchen Längsdichtung besteht jedoch das Problem, daß sie über die Tragkörperlänge durchhängen kann, so daß trotzdem Schmutz in den Lagerbereich eindringt. Oft ist die Längsdichtung labil, da sie nur aus einem elastischen Kunststoff besteht. Bei der vorbekannten Ausführung ist daher die Längsdichtung jeweils an einem Rückhaltesteg für die Wälzkörper befestigt, der mit mehreren Schrauben an dem Tragkörper angeschraubt ist. Aus der EP 0 427 238 A ist es auch bekannt, untere Längsdichtungen oder Längsabstreifer in Ausnehmungen oder Vertiefungen des Tragkörpers anzuordnen, wobei ihre Dichtlippen an der Führungsschiene anliegen.

Die DE 44 13 373 A zeigt ein Linearwälzlager, bei dem der Tragkörper an jeder Längsseite der Führungsschiene ein lösbares Tragkörperunterteil aufweist, welches zur Abdichtung zwei Längsdichtungsleisten mit Dichtlippen benötigt.

Das DE 93 11 059 U zeigt ein Linearwälzlager, bei dem an jeder Längsseite der Führungsschiene zwischen dem Tragkörper und der Führungsschiene oberhalb der oberen Wälzkörperreihe und unterhalb der unteren Wälzkörperreihe Dichtlippen vorgesehen sind, die den Austritt von Schmierstoff aus dem Wälzkörperbereich verhindern. Diese Längsdichtungen befinden sich in Nuten des Tragkörpers. Hier besteht jedoch das Problem, daß sich infolge der Nuten im Tragkörper Kerbwirkungen ergeben, die sich ungünstig auswirken können.

Aus der DE 4 226 607 A ist ein Linearwälzlager bekannt, bei dem der Längsabstreifer pilzförmige Vorsprünge aufweist, die in entsprechend profilierten Schlitzen von Kopfstücken eingeschnappt werden.

Ein Linearwälzlager der eingangs genannten Art zeigt die US 5 358 336 A. Dort sind in den Längsabstreifern über deren Länge sich erstreckende Armierungsplatten eingebettet. Die Längsabstreifer erstrecken sich bis in die Bereiche der Kopfstücke und weisen dort Ausnehmungen auf. Zur Befestigung eines Längsabstreifers in dem Führungswagen sind Schnapphaken an den Kopfstücken ausgebildet, die in längliche Öffnungen in der Armierungsplatte des Längsabstreifers eingeschnappt sind.

Aus der US 5 492 343 A sind Dichtungen bekannt, bei denen als Armierung Metalldraht benutzt wird.

### Zusammenfassung der Erfindung

Der Erfindung liegt die Aufgabe zugrunde, das Linearwälzlager in seiner Funktion zu verbessern und den erforderlichen Bauraum zu verkleinern. Dabei soll das Auftreten von schädlichen Kerbwirkungen am Tragkörper vermieden werden.

Diese Aufgabe wird durch ein Linearwälzlager gemäß Anspruch 1 gelöst.

Zur Befestigung des Längsabstreifers sind erfindungsgemäß in dem Führungswagen Schnapphaken an den Umlenkschalen der Kopfstücke ausgebildet, in welchen die freien Teillängen des Armierungsdrahtes eingeschnappt sind. Der Längsabstreifer kann also als unterer Längsabstreifer mittels der Drahtteilstücke direkt in den Schnapphaken eingeschnappt werden, die sich an den Umlenkschalen befinden. Die Umlenkschalen sind zu den Laufbahnen für die Wälzkörper genau positioniert. Außerdem wird eine Führungsschienennut gleichzeitig mit den Laufbahnen geschliffen. Daher ist die Position des Längsabstreifers bezüglich der Führungsschienennut optimal. Die Positionstoleranzen können minimal gehalten werden. Es ergibt sich somit eine einfache, platzsparende Befestigung des Längsabstreifers. Durch geeignete Wahl der Dichtlippengeometrie kann derselbe Abstreifer sowohl für die Abdichtung auf der Schienenoberkante, als auch zur Abdichtung in einer Schienenlängsnut verwendet werden.

Der eingebettete Armierungsdraht dient bei den als obere und untere Längsabstreifer ausgebildeten Längsdichtungen dazu, diese zu stabilisieren und kann gleichzeitig zur Befestigung der Längsabstreifer an dem Tragkörper genutzt werden.

Der obere Längsabstreifer kann zwei Dichtlippen haben, wovon eine obere Dichtlippe gegen den Tragkörper des Führungswagens und eine untere Dichtlippe gegen eine obere Dichtfläche der Führungsschiene abdichtet. Dadurch wird auch bei geringfügigem Durchhängen des Längsabstreifers ein Eindringen von Schmutz in den Lagerbereich verhindert, ohne daß kostenintensive Nuten im Tragkörper angebracht zu werden brauchen. Der Längsabstreifer wird so ausgelegt, daß die Dichtlippen im eingebauten Zustand beide mit einer Vorspannung versehen sind.

Der untere Längsabstreifer kann ebenfalls zwei Dichtlippen aufweisen, wobei die eine Dichtlippe in eine Nut in der Führungsschiene greift, so daß der anfallende Schmutz die Dichtlippe zusätzlich gegen die Führungsschiene drückt und auf diese Weise die Dichtwirkung erhöht. Die zweite Dichtlippe dichtet gegen den Tragkörper ab. Da der Abstreifer sich in einer Vertiefung im Tragkörper befinden kann, ist auch beim Durchhängen des Abstreifers das Eindringen von Schmutz in den Spalt zwischen dem Tragkörper und dem Abstreifer nicht möglich.

Der Längsabstreifer kann sich bis an die beiden Frontabstreifer erstrecken, wobei diese an ihren Stoßstellen mit dem Längsabstreifer angeformte Stege aufweisen. Auf diese Weise wird der Spalt zwischen den Dichtungen ausgefüllt.

### Kurze Beschreibung der Zeichnungen

Ausführungsbeispiele der Erfindung sind in den Zeichnungen enthalten und werden im folgenden näher beschrieben. Es zeigen:
- Figur 1: schematisch einen Teilquerschnitt durch das Linearwälzlager mit einem oberen Längsabstreifer;
- Figur 2: einen Längsabstreifer in einer ersten Ausführungsform;
- Figur 3: eine Führungsschiene in stirnseitiger Ansicht;
- Figur 4: einen Längsabstreifer in einer zweiten Ausführungsform;
- Figur 5: einen Längsabstreifer in einer dritten Ausführungsform;
- Figur 6: einen Querschnitt durch den Längsabstreifer nach Figur 5 im eingebauten Zustand;
- Figur 7: ausschnittsweise einen Frontabstreifer und
- Figur 8: ausschnittsweise einen Frontabstreifer und einen Längsabstreifer.

### Ausführliche Beschreibung der Zeichnungen

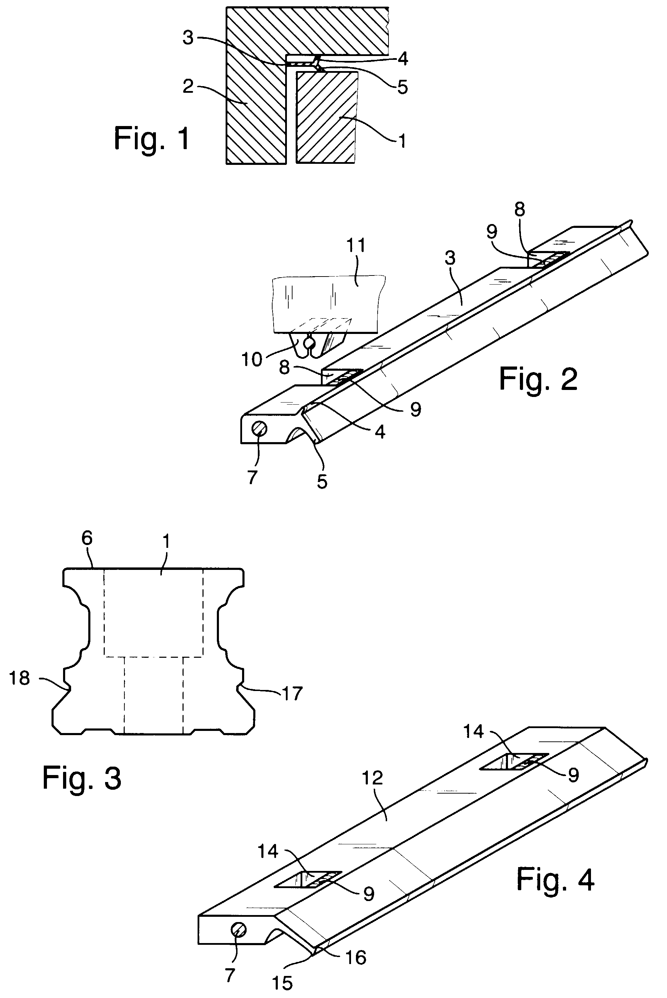

Zwischen einer Führungsschiene 1 eines Linearwälzlagers und einem im Querschnitt U-förmigen, die Führungsschiene 1 umgreifenden Tragkörper 2 ist als Dichtungselement ein Längsabstreifer 3 angeordnet, der gemäß Figur 1 eine obere Dichtlippe 4 und eine untere Dichtlippe 5 aufweist. Während die untere Dichtlippe 5 an der oberen Dichtfläche 6 der Führungsschiene 1 dichtend anliegt, berührt die obere Dichtlippe 4 den Tragkörper 2 an seiner inneren Oberfläche. Aus Figur 2 ist erkennbar, daß in dem Längsabstreifer 3 ein Armierungsdraht 7 eingebettet ist, der sich über die gesamte Länge des Längsabstreifers 3 erstreckt. An zwei Stellen seiner Länge weist der Abstreifer 3 Ausnehmungen 8 auf, in welchen Teillängen 9 des Armierungsdrahtes 7 freigelegt sind. Daher kann der Längsabstreifer 3 hier mit den Teillängen 9 in Schnapphaken 10 eingesteckt werden, die an den beiden Umlenkschalen 11 für die Wälzkörper in den beiden Stirnseitenbereichen des Tragkörpers 2 angeordnet sind. Auf diese Weise wird der Längsabstreifer 3 an den Umlenkschalen 11 und damit an dem Tragkörper 2 befestigt.

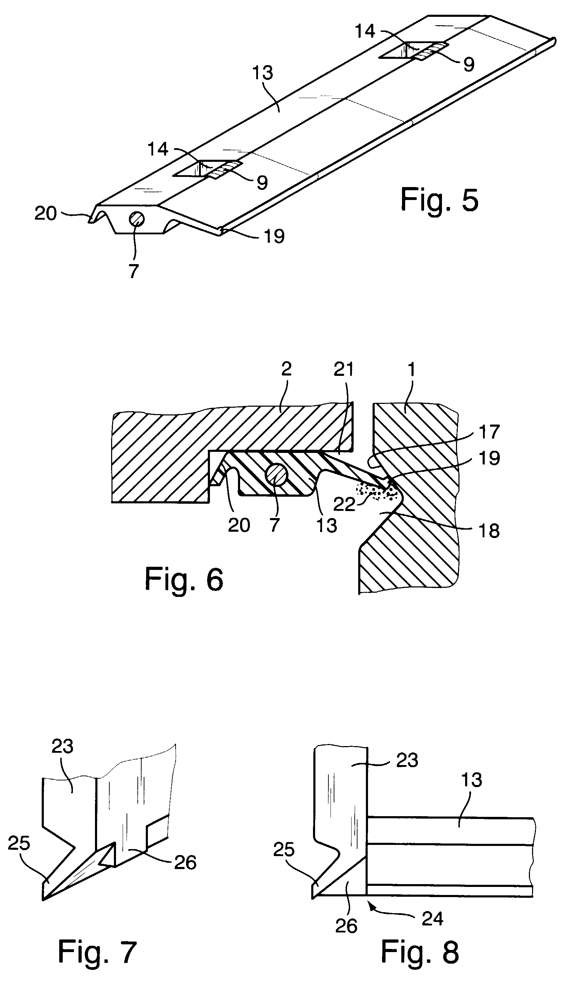

Auch der Längsabstreifer 12 gemäß Figur 4 und der Längsabstreifer 13 gemäß den Figuren 5 und 6 weisen zur Befestigung solche Teillängen 9 des Armierungsdrahtes 7 in Ausnehmungen 14 auf. Der Längsabstreifer 12 kann sowohl als oberer Längsabstreifer verwendet werden, wobei sich eine untere Dichtlippe 15 an der oberen Dichtfläche 6 der Führungsschiene 1 anlegt. Er kann aber auch als unterer Längsabstreifer verwendet werden, dann legt sich seine obere Dichtlippe 16 an einer unteren Dichtfläche 17 der Führungsschiene 1 an, die innerhalb einer Längsnut 18 der Führungsschiene 1 ausgebildet ist.

Bei dem Längsabstreifer 13 gemäß den Figur 5 und 6 sind an den beiden voneinander abgewandten Längsseiten eine Dichtlippe 19 für die Anlage an der Führungsschiene 1 und eine Dichtlippe 20 für die Anlage an dem Tragkörper 2 ausgebildet. Dieser Längsabstreifer ist innerhalb einer Ausnehmung 21 des Tragkörpers 2 befestigt, seine Dichtlippe 19 greift in die Längsnut 18 der Führungsschiene 1 ein und liegt dort an deren unterer Dichtfläche 17 an, so daß Schmutzpartikel 22 nicht in den Lagerbereich des Linearwälzlagers hineingelangen können.

Bei der Berührung der beiden Stirnseiten eines Längsabstreifers 13 mit den beiden Stirnseiten an den anliegenden Frontabstreifern 23 würde wegen der Dichtlippe 25 des Frontabstreifers 23 jeweils ein dreieckförmiger Freiraum entstehen, wenn der Frontabstreifer 23 hier nicht einen angeformten Steg 26 aufweisen würde. Der Steg 26 trägt also zur sicheren Abdichtung des Lagerbereichs des Linearwälzlagers bei.

### Bezugszahlenliste

- 1: Führungsschiene
- 2: Tragkörper
- 3: Längsabstreifer
- 4: obere Dichtlippe
- 5: untere Dichtlippe
- 6: obere Dichtfläche
- 7: Armierungsdraht
- 8: Ausnehmung
- 9: Teillänge
- 10: Schnapphaken
- 11: Umlenkschale
- 12: Längsabstreifer
- 13: Längsabstreifer
- 14: Ausnehmung
- 15: untere Dichtlippe
- 16: obere Dichtlippe
- 17: untere Dichtfläche
- 18: Längsnut
- 19: Dichtlippe
- 20: Dichtlippe
- 21: Ausnehmung
- 22: Schmutzpartikel
- 23: Frontabstreifer
- 24: Stoßstelle
- 25: Dichtlippe
- 26: Steg

## Patentansprüche

1. Linearwälzlager mit einer festen Führungsschiene (1 ) und einem diese teilweise umgreifenden, im Querschnitt U-förmigen Führungswagen, der an der Führungsschiene (1) längsverschieblich gelagert und von einem Tragkörper (2) gebildet ist, an dessen in Fahrtrichtung weisenden Stirnseiten als Umlenkteile für Wälzkörper wirkende Kopfstücke mit die Führungsschienenkontur berührenden Frontabstreifern (23) angeordnet sind, wobei zwischen dem Führungswagen und der Führungsschiene (1) als Dichtungen wirkende Längsabstreifer (3, 12, 13) mit an der Führungsschiene (1) anliegenden Dichtlippen (5, 15, 16, 19) angeordnet sind, wobei in den Längsabstreifern (3, 12, 13) jeweils ein über deren Länge sich erstreckendes Armierungsteil (7) eingebettet ist, wobei die Längsabstreifer (3, 12, 13) sich bis in die Bereiche der Kopfstücke erstrecken und dort Ausnehmungen (8, 14) aufweisen, und wobei zur Befestigung der Längsabstreifer (3, 12, 13) in dem Führungswagen Schnapphaken (10) an den Kopfstücken oder an Umlenkschalen (11) der Kopfstücke ausgebildet sind, **dadurch gekennzeichnet**, daß das Armierungsteil jeweils ein Armierungsdraht ist, der Armierungsdraht (7) jeweils in den Ausnehmungen (8, 14) freigelegt ist, und die freigelegten Teillängen (9) der Armierungsdrähte (7) in den Schnapphaken (10) eingeschnappt sind.

2. Linearwälzlager nach Anspruch 1, **dadurch gekennzeichnet,** daß der Längsabstreifer (3, 12, 13) sich bis an die beiden Frontabstreifer (23) erstreckt, wobei diese an ihren Stoßstellen (24) mit dem Längsabstreifer (3, 12, 13) angeformte Stege (26) aufweisen.

3. Linearwälzlager nach Anspruch 1, **dadurch gekennzeichnet,** daß die Führungsschiene (1) zwei gegenüberliegende V-förmige Längsnuten (18) aufweist, an deren Dichtflächen (17) die Dichtlippen (16, 19) der Längsabstreifer (12, 13) abdichtend anliegen.

4. Linearwälzlager nach Anspruch 3, **dadurch gekennzeichnet**, daß bei Verschleiß der Dichtlippen (16, 19) der Längsabstreifer (12, 13) die V-förmigen Längsnuten (18) der Führungsschiene (1) im Zusammenspiel mit den Längsabstreifern eine Labyrinthdichtung bilden.

5. Linearwälzlager nach Anspruch 1, **dadurch gekennzeichnet**, daß die Längsabstreifer (3, 12, 13) so gestaltet sind, daß die Werkzeugteilungsebene bei einem Spritzwerkzeug außerhalb des Dichtlippenbereichs liegt.

6. Linearwälzlager nach Anspruch 1, **dadurch gekennzeichnet,** daß die Längsabstreifer (12, 13) in einer Ausnehmung (21) des Tragkörpers (2) angeordnet sind.

## Claims

1. Linear rolling bearing with a fixed guide rail (1) and a guide carriage which partially surrounds this, has a U-shaped cross-section, is mounted for longitudinal displacement on the guide rail (1) and is constituted by a carrier body (2) on the ends of which pointing in moving direction, there are arranged head pieces acting as deflectors for rolling elements and comprising front wipers (23) in contact with the guide rail contour, longitudinal wipers (3, 12, 13) which act as seals and have sealing lips (5, 15, 16, 19) which bear against the guide rail (1) being arranged between the guide carriage and the guide rail (1), an armouring part (7) extending over the length of the longitudinal wiper (3, 12, 13) being embedded in each longitudinal wiper (3, 12, 13), the longitudinal wipers (3, 12, 13) extending into the regions of the head pieces where they comprise recesses (8, 14), and snap hooks (10) being formed on the head pieces or on deflector shells (11) of the head pieces for fixing the longitudinal wipers (3, 12, 13) in the guide carriage, **characterised in that** each armouring part is an armouring wire (7) which is laid bare in the recesses (8, 14), and the bare sub-lengths (9) of the armouring wires (7) are snapped into the snap hooks (10).

2. Linear rolling bearing according to Claim 1, **characterised in that** the longitudinal wiper (3, 12, 13) extends up to the two front wipers (23) which, at their junctions (24) with the longitudinal wiper (3, 12, 13), comprise integrally formed webs (26).

3. Linear rolling bearing according to Claim 1, **characterised in that** the guide rail (1) comprises two opposing V-shaped longitudinal grooves (18) with the sealing surfaces (17) of which the sealing lips (16, 19) of the longitudinal wipers (12, 13) are in sealing contact.

4. Linear rolling bearing according to Claim 3, **characterised in that**, upon wear of the sealing lips (16, 19) of the longitudinal wipers (12, 13), the V-shaped longitudinal grooves (18) of the guide rail (1) form a labyrinth seal together with the longitudinal wipers.

5. Linear rolling bearing according to Claim 1, **characterised in that** the longitudinal wipers (3, 12, 13) are configured in such a way that the mould parting plane of an injection mould is situated outside of the sealing lip region.

6. Linear rolling bearing according to Claim 1, **characterised in that** the longitudinal wipers (12, 13) are arranged in a recess (21) of the carrier body (2).

## Revendications

1. Palier linéaire à roulement comprenant un rail de guidage (1) fixe et un chariot de guidage à section en forme de U qui entoure le rail de guidage (1) en partie en étant monté coulissant sur celui-ci et qui est constitué par un corps de support (2) sur les extrémités duquel orientées en direction d'avancement, sont agencées des pièces de tête qui agissent en éléments de renvoi de corps roulants et qui sont munies de racleurs frontaux (23) lesquels sont en contact avec le contour du rail de guidage, il étant disposé entre le chariot de guidage et le rail de guidage (1) des racleurs longitudinaux (3, 12, 13) qui agissent en joints et comprennent des lèvres d'étanchéité (5, 15, 16, 19) lesquelles sont en contact avec le rail de guidage (1), un élément d'armature (7) qui s'étend sur la longueur des racleurs longitudinaux (3, 12, 13) étant encastré dans chaque racleur longitudinal, les racleurs longitudinaux (3, 12, 13) s'étendant jusque dans les régions de pièces de tête où ils présentent d'évidements (8, 14), il étant formé sur les pièces de tête ou sur des cuvettes de renvoi (11), pour la fixation des racleurs longitudinaux (3, 12, 13) dans le chariot de guidage, des crochets d'encliquetage (10), **caractérisé en ce que** l'élément d'armature est en chaque cas un fil d'armature (7) qui est déblayé dans les évidements (8, 14), et les sous-longueurs (9) déblayées des fils d'armature sont encliquetées dans les crochets d'encliquetage (10).

2. Palier linéaire à roulement selon la revendication 1, **caractérisé en ce que** le racleur longitudinal (3, 12, 13) s'étend jusqu'aux deux racleurs frontaux (23) qui, à leurs jonctions (24) avec le racleur longitudinal (3, 12, 13), comprennent des ailettes (26) solidaires.

3. Palier linéaire à roulement selon la revendication 1, **caractérisé en ce que** le rail de guidage (1) comprend deux rainures longitudinales (18) opposées en forme de V, et les lèvres d'étanchéité (16, 19) des racleurs longitudinaux (12, 13) sont en contact étanche avec les surfaces d'étanchéité (17) desdites rainures (18).

4. Palier linéaire à roulement selon la revendication 3, **caractérisé en ce que,** lors de l'usure des lèvres d'étanchéité (16, 19) des racleurs longitudinaux (12, 13), les rainures longitudinales (18) en forme de V du rail de guidage (1) forment en coopérant avec les racleurs longitudinaux une garniture à labyrinthe.

5. Palier linéaire à roulement selon la revendication 1, **caractérisé en ce que** les racleurs longitudinaux (3, 12, 13) sont configurés de façon telle que le plan de joint d'un moule à injection est situé à l'extérieur de la région des lèvres d'étanchéité.

6. Palier linéaire à roulement selon la revendication 1, **caractérisé en ce que** les racleurs longitudinaux (12, 13) sont disposés dans un évidement (21) du corps de support (2).
